# FASCICULE DE BREVET EUROPEEN

(11) **EP 0 777 975 B1**
(45) Date de publication et mention de la délivrance du brevet: **02.05.2003**
(21) Numéro de dépôt: 95203392.6
(22) Date de dépôt: 07.12.1995
(51) Int. Cl.: A23L 1/212, A23L 2/02, A23L 1/06

(54) **Traitement de végétaux**
Behandlung von Obst und Gemüse
Treatment of vegetables and fruit

(43) Date de publication de la demande: 11.06.1997
(73) Titulaire: SOCIETE DES PRODUITS NESTLE S.A., 1800 Vevey (CH)
(72) Inventeur: Daury, Marc Cédric, CH-1012 Lausanne (CH); Huynh-Ba, Tuong, CH-1009 Pully (CH); Raetz, Eric, CH-1012 Lausanne (CH)

(56) Documents cités:
- EP-A- 0 301 956
- EP-A- 0 482 322
- DATABASE WPI Week 9326 Derwent Publications Ltd., London, GB; AN 93-208275 XP002002474 & JP-A-05 130 847 (K. HAYASHI) , 28 Mai 1993

## Description

La présente invention a pour objet un nouveau procédé de préparation d'un jus ou d'une purée de végétaux permettant de conserver la couleur et le goût naturel cru de ces végétaux.

Dans de nombreuses opérations de transformation de végétaux, la matière première est préconditionnée à froid sans élimination de l'air, un blanchiment subséquent bloque ensuite les dégradations enzymatiques et microbiologiques, puis la matière est transformée en un produit final qui est congelé ou pasteurisé à la chaleur.

EP482322 (Societé des Produits Nestlé S.A.) décrit par exemple un blanchiment de légumes et de fruits découpés en petits morceaux pendant 1-15 min à 80-95°C, suivi d'une fermentation avec une bactérie lactique à 15-45°C jusqu'à un pH 3,1-4,4, et une pasteurisation durant 2-30 min à 80-110°C.

EP111590 (Frisco-Findus A.G.) décrit un procédé de préparation de légumes ou de fruits congelés produisant un volume réduit d'eaux résiduaires consistant à traiter les légumes ou les fruits de la manière habituelle jusqu'à l'étape de blanchiment, dans laquelle on blanchit au moyen de vapeur d'eau ou d'un mélange de vapeur d'eau et d'air, on récupère un condensat, on refroidit les légumes ou les fruits au moins en partie au moyen d'air, on les congèle et on procède au glaçage de leur surface avec au moins une partie du condensat produit lors du blanchiment.

FR2638064 (Guillamot) décrit un procédé de préparation de purées, de cocktails, et de nectars de fruits et de légumes dans lequel, on soumet des fruits et légumes complets, lavés mais non pelés, râpés ou découpés à un blanchiment, puis à des réactions enzymatiques de 2h à 24h mettant en oeuvre des enzymes naturels protéolytiques et/ou des enzymes choisis parmi les galacto-pectases et les pectines-lyases. Ce procédé permet uniquement d'accroître la solubilisation des matières solides d'origine protéique et pectinique.

Les conséquences d'un blanchiment préalable à la transformation de la matière peuvent être malheureusement des pertes accentuées de vitamines, d'arômes, de couleur, et de texture des légumes et/ou des fruits.

Des améliorations peuvent être apportées à l'étape de blanchiment d'un légume. FR2656547 (Cogat) propose ainsi un appareillage de blanchiment continu qui successivement désaère la matière par balayage d'un gaz neutre, la chauffe à la vapeur, maintient la température de chauffage, et refroidi sous vide les matières solides en récupérant les condensats aromatiques. Cet appareillage permet de limiter les dégradations enzymatiques oxydatives au cours du chauffage, et de récupérer les condensats aromatiques. Le goût, la couleur et la texture des légumes sont ainsi améliorés.

De même, EP0124627 (Frisco-Findus A.G.) propose un procédé de blanchiment dans lequel des légumes sont soumis à une première étape de blanchiment à 90-100°C pendant 1-30 secondes, puis à une deuxième étape de blanchiment à 45-90°C pendant 1-60 min dans de l'eau. La texture des légumes traités est plus ferme et la couleur est plus intense que celles des légumes traités par un blanchiment classique.

Malgré toutes les améliorations apportées à l'étape de blanchiment, on ne peut éviter une perte de couleur, de goût et de texture du légume et/ou du fruit traité.

Pour remédier à ce problème, aux effets négatifs d'une pasteurisation, et au mauvais goût naturel d'un jus de baie d'argousier (*Hyppophae rhamnoides*), DE3941555 (VE Forschungsinstitut für Obst- und Gemüsevearbeitung) propose de désinfecter à l'alcool des baies d'argousier fraîches et des fruits frais, les fruits ayant de préférence des arômes intenses, de préparer stérilement un mélange de purée de baies d'argousier désinfectées comprenant en outre 3-10% d'une purée de fruits désinfectés ou d'un jus issu des fruits, puis de le conserver sans présence d'air 24 heures à 6 mois à 10-30°C. On évite ainsi un blanchiment des fruits et des baies grâce à la désinfection par l'alcool. On évite aussi une pasteurisation finale du mélange grâce à la désinfection et au pH acide du mélange. Enfin on peut noter que le goût de "petit-lait" naturel des baies est modifié par les enzymes et les arômes des fruits ajoutés.

La présente invention vise à éviter une étape de blanchiment de végétaux, et surtout à utiliser les enzymes endogènes des végétaux pour renforcer leur goût et/ou leur arôme naturel cru, ainsi que leur couleur naturelle au cours de leur transformation en jus ou purée.

### Résumé de l'invention

A cet effet, dans le procédé de préparation d'un jus ou d'une purée de végétaux selon l'invention, on homogénéise en présence d'eau, le cas échéant sous atmosphère inerte, au moins une matière végétale, non blanchie dans des conditions propes à assurer le broyage complet d'au moins 20% en poids frais des végétaux de manière à libérer une partie des précurseurs d'arômes et des enzymes endogènes, on incube l'homogénat ainsi obtenu durant 15 à 120 min à une température comprise entre 20 et 50°C, on le transforme en jus ou purée, puis on le pasteurise, stérilise ou congèle.

L'invention concerne aussi un jus ou une purée cuit issu de végétaux non blanchis, susceptible d'être obtenu par le procédé selon l'invention, présentant un arôme naturel cru renforcé, et une couleur naturelle mieux conservée que celle d'un même jus ou purée cuit issu de végétaux blanchis.

L'invention concerne également l'utilisation des produits selon l'invention dans la préparation d'un produit alimentaire.

On a constaté que l'on peut avantageusement supprimer l'étape classique de blanchiment des végétaux, sans altérer les qualités organoleptiques ou de texture du produit final. Il n'est d'ailleurs pas toujours nécessaire de préalablement désinfecter les végétaux, un simple lavage à l'eau pouvant parfaitement convenir. On peut remarquer que cette suppression va à l'encontre des principes généraux admis dans la transformation des végétaux, car l'étape de blanchiment permet habituellement de bloquer les dégradations enzymatiques et microbiologiques.

Par ailleurs le procédé selon l'invention permet aussi de renforcer la texture naturelle fibreuse de la purée.

D'une manière surprenante, on peut conserver la couleur et renforcer substantiellement le goût et l'arôme naturel cru et frais des végétaux en libérant par broyage mécanique les précurseurs d'arômes et les enzymes endogènes des végétaux. Toutefois dans la plupart des cas, il faut prendre garde à homogénéiser et à incuber le végétal sous une atmosphère inerte pour prévenir les réactions d'oxydations dommageables à la couleur et au goût. On peut remarquer que DE3941555 mentionnée ci-dessus vise à transformer le goût de baies d'argousier en ajoutant des fruits très aromatiques, tandis que la présente invention vise uniquement à renforcer le goût et l'arôme naturel des végétaux sans ajout d'agent supplémentaire.

### Description détaillée de l'invention

Par le terme "pasteurisation" on entend une inactivation de tous les germes végétatifs, par exemple aux moyens de la chaleur et/ou de la pression. De même, par le terme "stérilisation" on entend une inactivation de tous les germes incluant les endospores bactériennes thermo-résistantes.

Par le terme "jus" on entend une solution aqueuse issue des végétaux, par exemple par pression ou par décoction, pouvant en outre comprendre une certaine proportion de concentré de légumes, d'agrumes, de fruits ou de mélanges de concentrés naturels de fruits ainsi qu'une certaine proportion de divers produits édulcorants, nutritifs et/ou apportant des nutriments essentiels. Le terme "jus" peut aussi être désigné par les termes courants "nectar" ou "cocktail".

Par le terme "purée" on entend des végétaux cuits, écrasés ou homogénéisés, ayant une consistance permettant leur consommation à l'aide d'une fourchette, par exemple. Le terme "purée" peut aussi désigner couramment les bouillies, mousselines, compotes et les crèmes de végétaux.

Par le terme "blanchir" on entend l'étape de traitement thermique initiale de fruits et/ou légumes entiers ou en morceaux, généralement réalisée au moyen de vapeur d'eau ou d'eau chaude, par exemple, et destinée à bloquer les dégradations enzymatiques et le développement microbien. Pour plus de détail, voir l'enseignement de EP111590 et EP124627.

Par l'expression "arôme cru ou frais" on entend le goût en bouche et/ou l'arôme en nez d'une purée ou d'un jus selon l'invention qui est similaire, voire identique, à ceux d'une purée ou d'un jus non-cuit issu de végétaux non-blanchis. On entend par "arôme cru renforcé" un goût en bouche et/ou un arôme en nez crus des jus et purées cuits selon l'invention, qui sont plus intenses que ceux des jus ou purées cuits issus classiquement de végétaux blanchis ou non.

Pour mettre en oeuvre le présent procédé, on peut utiliser comme matière végétale des fruits et/ou des légumes, c'est à dire tout végétal comestible, qu'il s'agisse d'une graine, racine, tubercule, tige, feuille, fleur ou fruit, par exemple. On utilise cependant de préférence des végétaux pour lesquels on désire renforcer le goût frais naturel. On évitera donc particulièrement les végétaux dont le goût naturel peut être désagréable ou dont le goût cuit est recherché, notamment l'asperge, le petit pois, le soja, la pomme de terre, les céréales, la baie d'argousier, les nèfles, par exemple. Parmi les végétaux préférés, on peut plus particulièrement distinguer les feuilles, notamment le poireau, le fenouil et le chou, les tiges, notamment la rhubarbe et le brocoli, certaines racines, notamment la carotte, l'oignon, le radis, le céleri et la betterave, les tubercules, notamment le manioc, et les fruits notamment la tomate, la courgette, l'aubergine, la banane, la pomme, l'abricot, le melon, la pastèque, la poire, la prune, la pêche, la cerise, le kiwi et la mirabelle, par exemple.

On peut aussi utiliser comme végétaux des champignons supérieurs comestibles peuvent être considérés comme compris dans les végétaux, notamment *Agaricus bisporus, Pleurotus ostreatus, Boletus edulis* ou *Lentinus edodes*, par exemple.

De préférence, on lave abondamment à l'eau au moins un végétal, le cas échéant on le pèle et on le coupe en morceaux s'il présente une relativement grande dimension. Pour des végétaux particulièrement contaminés microbiologiquement comme par exemples les fraises, on peut aussi les désinfecter dans une solution d'alcool, notamment une solution à 70% d'ethanol, par exemple.

On homogénéise alors les végétaux en présence d'eau, le cas échéant sous une atmosphère inerte. Pour cela, on peut placer l'eau, le sel, et les végétaux dans un broyeur ayant une enceinte fermée dans laquelle circule un gaz inerte utilisable dans les procédés alimentaires, notamment le CO2, l'azote, l'argon, l'hélium, seuls ou en mélange, par exemple. Il est avantageux d'avoir une atmosphère de gaz inerte ayant une pression partielle d'oxygène inférieure à 0,05 atm, par exemple.

De préférence, on ajoute aux végétaux une quantité d'eau telle que le mélange homogénéisé comprenne moins de 50% en poids de matière sèche de végétal, notamment moins de 40% en poids de matière sèche, par exemple entre 20% et 40%. On peut déjà à ce stade ajouter des ingrédients comme des sels, des épices, des conservateurs, des épaississants, des agents bactériostatiques, par exemple.

Le degré de broyage des végétaux dépend du produit final que l'on désire obtenir. Pour une purée, on peut finement diviser les végétaux, tandis que pour une purée ayant une texture grossière, c'est à dire une compote, on peut se limiter à un broyage plus grossier qui laisse apparentes les fibres des végétaux. Cependant, il est préférable d'assurer un broyage suffisant pour qu'au moins 20% en poids frais des végétaux soit complètement broyé et réduit en bouillie, de préférence 30%. On libére ainsi une quantité suffisante d'enzymes et de précurseurs d'arômes, pour que l'on puisse renforcer substantiellement l'arôme naturel cru des végétaux.

L'homogénat est ensuite incubé à une température comprise à 20-50°C pendant 15 à 120 min. On préfère aussi incuber l'homogénat sous une atmosphère de gaz inerte de manière à réduire son oxydation. La température et le temps d'incubation dépendent du type de végétal et de leur degré de broyage. D'une manière générale, plus les végétaux sont traités rapidement après leur récolte, c'est à dire plus ils sont frais, ou plus leur broyage est poussé, moins il est nécessaire de prolonger le temps d'incubation. Il est en fait dans les compétences de l'homme du métier de déterminer pour chaque végétal, en fonction de sa fraîcheur, quels sont le degré de broyage, la période d'incubation et la température d'incubation préférés.

Selon le temps et la durée d'incubation, et le degré en carbohydrates et de contamination microbiologiques des végétaux, il peut être nécessaire d'ajouter à l'homogénat des agents bactériostatiques, comme par exemple les bactériocines décrites dans EP95810497,8 et WO 94/02805.

On peut transformer ensuite directement l'homogénat en jus ou purée par des méthodes connues de l'homme du métier. Pour préparer un jus, on peut presser l'homogénat, séparer le jus, et le cas échéant décanter le jus, par exemple. Par contre, la purée peut avoir déjà la bonne consistance grâce à l'homogénéisation préalable des légumes et/ou des fruits. On peut alors directement ajouter d'autres ingrédients tels que des sels comme 0,15-0,35% de NaCl, des conservateurs, des sucres comme du miel, des édulcorants comme l'aspartame ou l'acésulfame y compris les polyols tels que le xylitol, des extraits aromatiques, des extraits de levure, des vitamines, des alcools, des agents épaissisants comme l'amidon ou le carboxy-méthyl-cellulose, par exemple.

Certains jus ou purées de végétaux se prêtent très bien à une consommation lorsqu'ils sont crus, c'est à dire lorsqu'ils ne sont pas traités à des températures supérieures à 70°C. Parmi ces produits, on peut distinguer les jus et les purées de brocolis, de carottes ou de fraises, par exemple. On peut ainsi envisager de congeler le jus ou la purée obtenu par le procédé selon l'invention, le cas échéant sous une atmosphère inerte ou sous vide, par exemple à une température comprise entre -25°C et -50°C, notamment entre -30°C et -40°C. De préférence, le produit est refroidi à une température de +2°C à -5°C en étant mélangé intimement à une quantité comprise entre 20% et 80% en poids d'un jus ou d'une purée congelé selon l'invention.

Au lieu de congeler les produits, on peut aussi réduire la charge microbienne tout en ne cuisant pas les produits, en les soumettant à une pression supérieure à 300 MPa, de préférence supérieure à 500MPa, pendant 1 à 30 min à une température comprise entre -5°C et 70 °C, par exemple. Pour pasteuriser à une haute pression, on peut isoler le jus ou la purée du liquide utilisé pour transmettre la haute pression, par exemple de l'eau ou de l'huile, par des moyens d'emballage notamment dans des récipients déformables en plastique ou en aluminium, par exemple. Ces récipients peuvent être ensuite placés dans une chambre d'un dispositif de haute pression, par exemple un autoclave adéquat, dans laquelle on applique le traitement sous haute pression pendant un temps et à une température adéquats pour obtenir une pasteurisation sans cuisson. Le temps de traitement commence à partir du moment où l'on atteint la pression et la température désirées, le temps nécessaire pour atteindre ces valeurs étant en moyenne de l'ordre de 1 min, par exemple. On peut aussi envisager d'amener le jus ou la purée par le moyen de conduits appropriés dans une chambre d'un dispositif de haute pression, par exemple un autoclave adéquat, dans lequel on appliquera la pression et la température désirées, par exemple.

Par contre, d'autres jus ou purée de végétaux se prêtent mieux à une consommation lorsqu'ils sont cuits, c'est à dire lorsqu'ils sont traités à des températures supérieures à 70°C pour établir une cuisson. Si l'on veut un produit cuit, on peut alors traiter thermiquement le jus ou la purée obtenu par le procédé selon l'invention pendant 2-30 min à 70-125°C, par exemple. Si l'on réalise un traitement durant moins de 2 min ou à moins de 70°C ou 80°C, on risque de ne pas réunir les conditions nécessaires à l'inactivation des spores de microorganismes sporulants et à l'inactivation de cellules végétatives. Si l'on réalise le traitement durant plus de 30 min ou à plus de 125°C, on risque de trop amollir la texture de la purée et de détruire certains arômes fragiles.

Dans le cas particulier des légumes et/ou des fruits comprenant des pigments de leucanthocyanidines, comme les bananes, les poires, les pommes, les choux, les chou-fleur et les oignons, par exemple, on peut recommander avant l'étape de traitement thermique, d'ajouter au jus ou à la purée au moins 2% en poids de protéines dérivées du lait, des oeufs, des tissus animaux ou du soja, par exemple. On évitera ainsi l'apparition d'une coloration rougeâtre au cours de l'étape de pasteurisation à la chaleur. Pour plus de détails, voir l'enseignement de EP191311.

On peut aussi réduire la charge microbienne tout en cuisant modérément les produits, en les soumettant à une pression supérieure à 300 MPa, de préférence supérieure à 500MPa, pendant 1 à 30 min à une température comprise entre 70°C et 125°C, de préférence entre 70°C et 90°C.

Dans une première forme de réalisation particulière de la présente invention, on homogénéise en présence d'eau des fruits et/ou des légumes frais sous une atmosphère inerte de manière à libérer une partie des enzymes endogènes, on incube l'homogénat à une température comprise entre 20°C et 50°C pendant 15 à 120 min on le transforme en jus ou purée, on le fermente par une bactérie lactique à 15-45°C jusqu'à pH 3,1-4,5, puis on le pasteurise.

On peut choisir la bactérie lactique, autrement dit une bactérie productrice d'acide lactique, parmi les souches du commerce couramment utilisées pour la préparation de produits fermentés tels qu'un salami, une choucroute, ou un yogourt par exemple. On peut utiliser notamment une souche de *Lactobacillus plantarum, de* *Leuconostoc mesenteroides* ou de *Lactobacillus brevis* et réaliser la fermentation à une température de environ 20-35°C, par exemple. On peut aussi utiliser une souche de *Streptococcus thermophilus* et *Lactobacillus bulgaricus,* rajouter au milieu jusqu'à 2% de lactose et réaliser la fermentation à 35-45°C. En particulier, on ajoute au jus ou à la purée de légumes et/ou de fruits, lorsqu'il est relativement pauvre en sucre fermentescible, jusqu'à 2% de saccharose ou de glucose. Il peut aussi s'avérer nécessaire selon le degré de contamination du mélange d'opérer une pasteurisation du jus ou de la purée avant de la fermenter par une bactérie lactique.

Dans une autre forme de réalisation particulière de la présente invention, on homogénéise en présence d'eau des fruits et/ou des légumes frais sous une atmosphère inerte de manière à libérer une partie des enzymes endogènes, on incube l'homogénat à à une température comprise entre 20°C et 50°C pendant 15 à 120 min on le transforme en jus, on le pasteurise, puis on le concentre, voire on le sèche.

On peut ainsi concentrer le jus ou un extrait liquide d'une purée selon l'invention par évaporation sous vide, distillation ou ultrafiltration, par exemple. Le concentré peut être pasteurisé, ou séché par atomisation ou par lyophilisation, par exemple. On peut ainsi obtenir une poudre hydrosoluble à l'arôme frais renforcé.

Dans une variante du procédé, on ajoute au concentrat, les arômes volatils récupérés par condensation lors de l'étape d'évaporation ou de distillation et l'on sèche le mélange obtenu, le cas échéant après adjonction d'un support hydrosoluble, comme des maltodextrines. De préférence la poudre finale comprend au moins 10% en poids d'extrait de végétal séché par rapport au poids du support hydrosoluble.

Finalement, les produits selon l'invention peuvent être conservés dans un emballage stérile de stockage adéquat. On constate que le produit présente un goût et une couleur qui se rapprochent du goût et de la couleur des légumes et/ou des fruits utilisés. De plus, le produit ne perd rien de ses qualités après une conservation de plusieurs mois, voire une année à température ambiante.

L'invention concerne donc les nouveaux jus ou purées cuits, qui sont issus de végétaux non blanchis, qui sont susceptibles d'être obtenu par le présent procédé, et qui présentent un arôme naturel cru renforcé, et une couleur naturelle mieux conservée que celle de mêmes jus ou purées cuits issus de végétaux blanchis.

De préférence, l'invention concerne les nouveaux jus ou purées cuits issus de végétaux non blanchis, susceptibles d'être obtenu par le présent procédé, présentant un arôme cru renforcé, présentant des paramètres CIELAB (CIE, colorimetry, 2ième édition, Publication CIE, N°15.2, Bureau Central de la Commission Internationale de L'Eclairage, Vienne, Autriche) de teinte a* et b* compris entre 70% et 130% de ceux des mêmes jus ou purées non-blanchis et non-cuits, de préférence compris entre 80% et 120%, et présentant un paramètre CIELAB de clarté L* supérieur à 70% de celui des mêmes jus ou purées non-blanchis et non-cuits, de préférence supérieur à 85%.

En particulier, on peut noter qu'au moins un des paramétres CIELAB des produits selon l'invention est supérieur d'un facteur 1,1 à celui des mêmes jus et purées issus de végétaux blanchis et cuits.

En particulier, l'invention concerne les nouveaux jus ou purées cuits issus de carottes non blanchies, susceptibles d'être obtenu par le présent procédé, présentant au moins 3 fois plus de 3-isobutyl-2-methoxy pyrazine, de beta-ionone, et de 1-octen-3-ol par rapport à un jus ou une purée cuit issu de carottes blanchies.

La présente invention est décrite plus en détail ci-après à l'aide du complément de description qui va suivre, qui se réfère à des exemples de fabrication de jus et de purées de fruits et de légumes. Les pourcentages sont donnés en poids sauf indication contraire. Il va de soi, toutefois, que ces exemples sont donnés à titre d'illustration de l'objet de l'invention dont ils ne constituent en aucune manière une limitation.

### Exemple 1

Des carottes fraîches sont lavées à l'eau, pelées, rincées à l'eau, et coupées en petits morceaux. Un volume de morceaux (300g) sont homogénéisés, à température ambiante et en absence d'air grâce à un flux d'azote, dans un broyeur en présence d'un autre volume d'eau et de 0,25% de NaCl. L'homogénéisation est conduite pendant 4 min jusqu'à l'obtention d'une purée de carotte. On incube ensuite la purée de carotte à 38°C pendant 60 min, puis on la stérilise directement à 121°C pendant 15 min dans un autoclave (type FVS/2/2000, Intégra Biosciences, Suisse).

Pour comparaison, des carottes fraîches sont lavées à l'eau, pelées, rincées à l'eau, coupées en petits morceaux, et blanchies dans de l'eau bouillante pendant 20 min. Un volume de morceaux blanchis est homogénéisé, à température ambiante dans un broyeur en présence d'un autre volume d'eau et de 0,25% de NaCl. L'homogénéisation est conduite pendant 4 min jusqu'à l'obtention d'une purée de carotte, puis on la stérilise directement à 121°C pendant 15 min dans un autoclave (type FVS/2/2000, Integra Biosciences, Suisse).

Une partie des purées stérilisées est directement soumise à une évaluation sensorielle, tandis qu'une autre partie est conservée à température ambiante pendant 20 jours pour une analyse sensorielle ultérieure. L'évaluation sensorielle est conduite par un groupe de 15 personnes qui sont invités à goûter 3 échantillons de chaque purée de carotte maintenus à une température de 40°C, et à les différencier en appréciant uniquement leurs propriétés aromatique et gustative.

100% des dégustateurs ont facilement différencié la purée de carottes blanchies (procédé classique) de celle obtenue par le procédé selon l'invention. Les commentaires sensoriels sont présentés dans le tableau 1 ci-après, ainsi que la texture et la couleur respectives des purées.

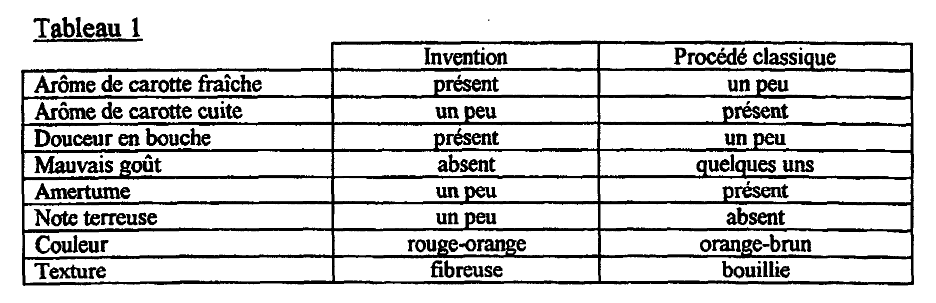

Tous les dégustateurs ont noté l'arôme de carotte fraîche, la texture fibreuse, et la couleur parfaite rouge-orange développée par le procédé selon l'invention. Par contre la purée de carottes blanchies se caractérise par des arômes de cuisson, un peu d'amertume, une texture lisse et une couleur un peu brune. La purée selon l'invention est préférée par 67% des dégustateurs, tandis que 33% n'aiment pas l'arôme développé par le nouveau procédé ou ont été surpris par l'arôme de carotte fraîche.

De plus, l'analyse par chromatographie GC-FID et GC-sniffing (combinaison de chromatographie gazeuse et olfactométrie) des volatiles de purées de carottes obtenues par les différents procédés, montre que le procédé selon l'invention apporte à la purée 4 à 5 fois plus de composés volatils par rapport à la purée obtenue par un procédé classique. Trois composés différents contribuent ainsi à la note organoleptique crue et fraîche de la purée de carotte, à savoir le 3-isobutyl-2-methoxy pyrazine, la beta-ionone, et le 1-octen-3-ol.

Les purées obtenues par le procédé selon l'invention et par le procédé classique, qui ont été conservées 20 jours à température ambiante, présentent les mêmes caractéristiques que celles analysées directement après leur préparation. L'arôme de carotte fraîche, la texture fibreuse, et la couleur rouge-orange des purées selon l'invention peuvent donc être conservées pendant une période de temps prolongée.

### Exemples 2-5

Les exemples visent à comparer la couleur et la saveur de purées fraise, banane, carotte et brocoli, suivant le type de traitement utilisé. Chaque légume et chaque fruit sont préparés séparément suivant le type de traitement. Dans tous les cas, les légumes et les fruits sont lavés à l'eau, égouttés, et coupés en morceaux. La carotte est au préalable pelée.

Les légumes et les fruits sont homogénéisés dans un récipient métallique Waring Blender® (Waring Product Dynamics Corporation of Am., New Hardford, CT, USA) en présence d'eau distillée dans un rapport 1:1 pendant 3 à 5 min, sous atmosphère inerte à température ambiante. La purée obtenue est transférée dans des pots en verre de 100g, remplis à raz bord. Les pots sont disposés dans un bain-marie à 37°C pendant 60 min. L'incubation est réalisée sous gaz inerte ou en absence d'air. Les réactions enzymatiques endogènes sont stoppées par une stérilisation à l'autoclave pendant 15 min à 121°C. Les pots sont ensuite stockés à 4°C.

Dans le cas particulier des brocolis, on prépare parallèlement une purée de brocoli non stérilisée. Pour cela, des morceaux de brocoli sont homogénéisés dans les mêmes conditions et proportions que celles décrites ci-dessus, la purée est transférée dans des sachets en plastique scellés sous vide, puis est incubée à 37°C pendant 60 min et ensuite congelée dans l'azote liquide avant d'être stockée à -20°C.

Pour comparaison, on prépare des purées de légumes et de fruits blanchis. Pour cela, les morceaux de légumes ou de fruits sont blanchis dans un bain d'eau bouillante pendant 20 min. Les morceaux sont ensuite homogénéisés dans un récipient métallique Waring Blender® en présence d'eau distillée dans un rapport 1:1 pendant 3 à 5 min. La purée obtenue est transférée dans des pots en verre de 100g, remplis à ras bord. L'ensemble des pots et leur contenu sont stérilisés à l'autoclave pendant 15 min à 121°C.

Dans le cas particulier des brocolis, on prépare parallèlement une purée de brocoli blanchis non stérilisée. Pour cela, des morceaux de brocoli sont blanchis et homogénéisés dans les mêmes conditions et proportions que celles décrites ci-dessus. La purée est transférée dans des sachets en plastique scellés sous vide, puis est congelée dans l'azote liquide avant d'être stockée à -20°C.

Pour permettre de comparer les teintes et la clarté de la coloration des purées préparées, une couleur de référence est obtenue en homogénéisant les légumes et les fruits dans un récipient métallique Waring Blender® en présence d'eau distillée dans un rapport 1:1 pendant 3 à 5 min, sous atmosphère inerte à température ambiante. La purée obtenue est transférée dans un sachet en plastique, qui est plongé dans l'azote liquide, puis stocké à -20°C.

Pour mesurer la couleur des échantillons, on réchauffe à température ambiante chaque échantillon de purée, on prélève et on dispose une partie dans des petites boites de Pétri en plastique destinées à l'analyse colorimétrique avec un spectrophotomètre Color-Eye-7000® (Macbeth, Division of Kollmorgen Instruments Corporation, New Windsor, NY, USA). Cet appareil permet de mesurer les paramètres L*, a* et b* suivant la notation CIELAB (voir aussi F.J. Francis et al., Food colorimetry: theory and applications, AVI Publishing mesurer les paramètres L*, a* et b* suivant la notation CIELAB (voir aussi F.J. Francis et al., Food colorimetry: theory and applications, AVI Publishing company, Inc., Westport, Virginia, USA), qui caractérisent les teintes et la clarté. Les teintes rouge, jaune, vert et bleu forment une roue de couleur disposée sur un plan a* et b*. Le paramètre L* définit la clarté des couleurs qui varie verticalement sur le plan a* et b*. Chaque valeurs L*, a* et b* obtenues pour chaque échantillon de purée résultent de la moyenne de 3 mesures séparées.

Pour évaluer la saveur des purées, une évaluation sensorielle est effectuée par un groupe de 5 personnes, comme décrit à l'exemple 1.

Les résultats, présentés dans le tableau 2 ci-après, montrent que la dérive des couleurs est limitée dans les purées incubées sous atmosphère inerte, et cela particulièrement pour les purées de fraise, de banane, et de carotte. Dans tous les cas, l'incubation sous atmosphère inerte permet également d'obtenir un goût et un arôme naturels. On peut noter l'avantage de conserver les purées de brocoli par congélation.

**Tableau 2**

| Fruit et légume (exemples 2-5) | Couleur observée | Couleur mesurée | | | Saveur |
|---|---|---|---|---|---|
| | | L* | a* | b* | |
| Exemple 2: fraise | | | | | |
| Contrôle | rouge rosée | 32,69 | 30,97 | 18,89 | |
| Incubation/stérilisation | rouge | 25,06 | 26,05 | 13,01 | goût de fraise persistant |
| Blanchiment/stérilisation | rouge foncée | 22,24 | 20,01 | 9,89 | goût fade,cuit |

| Exemple 3: banane | | | | | |
|---|---|---|---|---|---|
| Contrôle | jaune | 60,40 | 4,07 | 23,16 | |
| Incubation/stérilisation | brun | 53,04 | 4,98 | 13,78 | goût banane crue persistant |
| Blanchiment/stérilisation | marron | 45,60 | 5,71 | 10,71 | goût faible, sucré, fermenté |

| Exemple 4: carotte | | | | | |
|---|---|---|---|---|---|
| Contrôle | orange vif | 46,02 | 23,94 | 36,59 | |
| Incubation/stérilisation | orange vif | 41,43 | 29,45 | 39,25 | identique au tableau 1 |
| Blanchiment/stérilisation | orange brun | 37,37 | 16,04 | 31,04 | identique au tableau 1 |

| Exemple 5: brocoli | | | | | |
|---|---|---|---|---|---|
| Contrôle | vert clair | 44,09 | -12,29 | 31,38 | |
| Incubation/congélation | vert clair | 48,42 | -11,76 | 32,21 | arôme et goût vert intense |
| Blanchiment /congélation | vert brun | 46,52 | -2,11 | 27,80 | arôme et goût cuit |
| Incubation/stérilisation | vert jaune | 51,19 | -0,34 | 32,89 | arôme et goût cuit; note crue |
| Blanchiment/stérilisation | vert brun | 45,16 | 0,89 | 28,67 | arôme cuit + goût sucré, cuit et soufré |

Le tableau 3 ci-après présente le pourcentage de variation des paramètres a*, b* et L* par rapport à ceux des contrôles.

Dans tous les cas, l'indice de clarté L* des produits cuits non-blanchis est plus proche de la valeur de contrôle que celui obtenu à partir des produits cuits et blanchis.

Les produits préférés présentent des paramètres CIELAB de teinte a* et b* compris entre 70% et 130%, et un paramètre CIELAB de clarté L* supérieur à 70% par rapport à celui des mêmes jus ou purées non-blanchis et non-cuits.

**Tableau 3**

| Fruit et légume (exemples 2-6) | Couleur mesurée | | | | | |
|---|---|---|---|---|---|---|
| | L* | L*% | a* | a*% | b* | b*% |
| Exemple 2: fraise | | | | | | |
| Contrôle | 32,69 | | 30,97 | | 18,89 | |
| Incubation /stérilisation | 25,06 | 76 | 26,05 | 84 | 13,01 | 68 |
| Blanchiment / stérilisation | 22,24 | 68 | 20,01 | 64 | 9,89 | 52 |

| Exemple 3: banane | | | | | | |
|---|---|---|---|---|---|---|
| Contrôle | 60,40 | | 4,07 | | 23,16 | |
| Incubation /stérilisation | 53,04 | 87 | 4,98 | 122 | 13,78 | 59 |
| Blanchiment / stérilisation | 45,60 | 75 | 5,71 | 140 | 10,71 | 46 |

| Exemple 4: carotte | | | | | | |
|---|---|---|---|---|---|---|
| Contrôle | 46,02 | | 23,94 | | 36,59 | |
| Incubation /stérilisation | 41,43 | 90 | 29,45 | 123 | 39,25 | 107 |
| Blanchiment / stérilisation | 37,37 | 81 | 16,04 | 67 | 31,04 | 84 |

| Exemple 5: brocoli | | | | | | |
|---|---|---|---|---|---|---|
| Contrôle | 44,09 | | -12,29 | | 31,38 | |
| Incubation / congélation | 48,42 | 109 | -11,76 | 95 | 32,21 | 102 |
| Blanchiment / congélation | 46,52 | 105 | -2,11 | 17 | 27,80 | 88 |
| | | | | | | |
| Incubation /stérilisation | 51,19 | 116 | -0,34 | 3 | 32,89 | 104 |
| Blanchiment / stérilisation | 45,16 | 102 | 0,89 | - | 28,67 | 91 |

### Exemple 6

On prépare une purée de carotte comme décrit à l'exemple 1, à la différence qu'on la pasteurise à une haute pression hydrostatique. Pour cela, on répartit la purée dans des sachets en matière plastique stérile résistants à la haute pression, on les scelle sans bulles d'air, et on les soumet à une pression hydrostatique de 800 MPa pendant 20 min à 30°C à l'aide d'une presse (ABB GmbH, Suisse). Les purées dans des sachets en matière plastique stérile résistants à la haute pression, on les scelle sans bulles d'air, et on les soumet à une pression hydrostatique de 800 MPa pendant 20 min à 30°C à l'aide d'une presse (ABB GmbH, Suisse). Les purées peuvent ensuite être conservées pendant au moins 6 mois à température ambiante, sans que l'on observe de modifications d'arôme, de texture et de couleur.

### Exemple 7

On prépare un jus de carotte selon l'invention. Pour cela on lave à l'eau des carottes fraîches, on les pèle, on les rince, et les coupe en petits morceaux. Un volume de morceaux est ensuite homogénéisé, à température ambiante et en absence d'air grâce à un flux d'azote, dans un broyeur en présence de 2 autres volumes d'eau et de 0,25% de NaCl. L'homogénéisation est conduite pendant 4 min jusqu'à l'obtention d'une purée de carotte. On incube ensuite le mélange à 38°C pendant 120 min, on le presse à travers un filtre présentant une porosité de 100 µm, on isole le jus, puis on le stérilise à 121°C pendant 15 min dans un autoclave (type FVS/2/2000, Integra Biosciences, Suisse).

### Exemple 8

On prépare un jus de tomate selon l'invention. Pour cela on lave à l'eau des tomates fraîches, on les homogénéise à température ambiante et en absence d'air grâce à un flux de CO2, dans un broyeur en présence de 1,5 volumes d'eau et de 0,25% de NaCl. L'homogénéisation est conduite pendant 5 min jusqu'à l'obtention d'une bouillie liquide de tomate. On incube ensuite le mélange à 36°C pendant 100 min, on le presse à travers une membrane présentant une porosité de 100 µm, on isole le jus, puis on le pasteurise à 80°C pendant 15 min dans un autoclave.

Pour comparaison, on lave à l'eau des tomates fraîches, on les coupe en morceaux, et on les blanchit dans de l'eau bouillante pendant 20 min. Un volume de tomates blanchies est homogénéisé, à température ambiante, dans un broyeur en présence de 1,5 volumes d'eau et de 0,25% de NaCl. L'homogénéisation est conduite pendant 5 min jusqu'à l'obtention d'une bouillie liquide de tomate, on la presse à travers une membrane présentant une porosité de 100 µm, on isole le jus, puis on le pasteurise directement à 121°C pendant 15 min dans un autoclave.

Les dégustateurs peuvent facilement différencier l'arôme de tomate fraîche, et la couleur rouge prononcée du jus de tomate selon l'invention par rapport à ceux obtenus avec le jus de tomates blanchies.

### Exemple 9

On mélange les purées de fraise et de banane des exemples 2 et 3, on fermente le mélange par la souche *Streptococcus thermophilus* CNCM I-1424 jusqu'à un pH4,5, puis on la stérilise à 121°C pendant 15 min dans un autoclave.

### Exemple 10

On extrait une fraction liquide de la purée de carotte de l'exemple 1, on la concentre par évaporation sous vide, on la pasteurise 5 min à 121°C, on ajoute les arômes volatils récupérés par condensation lors de l'étape de concentration, et on la sèche par lyophilisation après adjonction de maltodextrine de manière à obtenir une poudre contenant 10% en poids de fraction de carotte séchée.

La poudre ainsi obtenue est aisément dispersable dans un milieu liquide en lui conférant un arôme de carotte crue renforcé.

## Revendications

1. Procédé de préparation d'un jus ou d'une purée de végétaux dans lequel on homogénéise en présence d'eau, le cas échéant sous atmosphère inerte, au moins une matière végétale non blanchie dans des conditions propres à assurer le broyage complet d'au moins 20 % en poids frais des végétaux, on incube l'homogénat ainsi obtenu durant 15 à 120 min à une température comprise entre 20 et 50 °C, on transforme ensuite l'homogénat ainsi incubé en jus ou purée, puis on le pasteurise, stérilise ou congèle.

2. Procédé selon la revendication 1 dans lequel, la matière végétale est choisie seule ou en combinaison dans le groupe des végétaux comestibles formé par les fruits et les légumes constitués des graines, racines, tubercules, tiges, feuilles ou fleurs.

3. Procédé selon la revendication 1 dans lequel, on incube l'homogenat sous une atmosphère inerte.

4. Procédé selon la revendication 1 dans lequel, l'homogénat comprend moins de 50% en poids de matière sèche de végétal.

5. Procédé selon l'une des revendications 1 à 4 dans lequel, le jus ou la purée est fermenté par une bactérie lactique à 15-45°C jusqu'à pH 3,1-4,5

6. Jus purée susceptible d'être obtenu au moyen du procédé selon l'une des revendications 1 à 5, cuit, présentant des paramètres CIELAB de teinte a* et b* compris entre 70% et 130%, et un paramètre CIELAB de clarté L* supérieur à 70% par rapport à celui d'un même jus ou purée de végétaux non-blanchis et non-cuits.

7. Jus ou purée selon la revendication 6, issu de carottes non blanchies cuit, et présentant au moins 3 fois plus de 3-isobutyl-2-methoxy pyrazine, de beta-ionone, et de 1-octen-3-01 par rapport à un même jus ou purée pasteurise issu de carottes blanchies.

## Patentansprüche

1. Verfahren zur Herstellung von Pflanzensaft oder -püree, bei dem man in Gegenwart von Waser ggf. unter Inertatmosphäre mindestens ein nichtblanchiertes Pflanzenmaterial bei Bedingungen homogenisiert, die die vollständige Zerkleinerung von mindestens 20 Frischgew.-% der Pflanzen gewährleisten können, das auf diese Weise erhaltene Homogenat während 15 bis 120 min bei einer Temperatur zwischen 20 und 50°C inkubiert, dann das auf diese Weise inkubierte Homogenat in Saft oder Püree überführt und es pasteurisiert, sterilisiert und einfriert.

2. Verfahren nach Anspruch 1, bei dem das Pflanzenmaterial allein oder in Kombination in der Gruppe von verzehrbaren Pflanzen ausgewählt wird, die von Früchten und Gemüsen gebildet ist, die aus Kernen, Wurzeln, Knollen, Stielen, Blättern oder Blüten bestehen.

3. Verfahren nach Anspruch 1, bei dem man das Homogenat unter Inertatmosphäre inkubiert.

4. Verfahren nach Anspruch 1, bei dem das Homogenat mindestens 50 Gew.-% pflanzliche Trockenmasse umfaßt.

5. Verfahren nach einem der Ansprüche 1 bis 4, bei dem der Saft oder das Püree bei 15-45°C durch eine Milchsäurebakterie bis zu pH 3,1-4,5 fermentiert wird.

6. Saft oder Püree, erhalten nach dem Verfahren nach einem der Ansprüche 1 bis 5, gekocht, mit CIELAB- Farbparametern a* und b* zwischen 70% und 130% und einem CIELAB-Helligkeitsparameter L* über 70% bezüglich des gleichen nicht blanchierten und nicht gekochten Pflanzensafts oder -pürees.

7. Saft oder Püree nach Anspruch 6 aus nichtblanchierten gekochten Karotten, der bzw. das bezüglich des gleichen pasteurisierten Safts oder Pürees von blanchierten Karotten mindestens das Dreifache an 3-Isobutyl-2-methoxypyrazin, beta-Ionon und 1-Octen-3-01 besitzt.

## Claims

1. Process for preparing a plant juice or a plant puree, in which at least one unblanched plant material is homogenized in the presence of water, where appropriate under an inert atmosphere, and under conditions suitable for completely comminuting at least 20% by fresh weight of the plants, the homogenate thus obtained is incubated for 15 to 120 minutes at a temperature of between 20 and 50°C, and the homogenate thus incubated is then converted into juice or puree, and then pasteurized, sterilized or frozen.

2. Process according to Claim 1, in which the plant material is chosen, alone or in combination, from the group of edible plants formed by fruit and vegetables, consisting of seeds, roots, tubers, stems, leaves or flowers.

3. Process according to Claim 1, in which the homogenate is incubated under an inert atmosphere.

4. Process according to Claim 1, in which the homogenate comprises less than 50% by weight of plant solids.

5. Process according to one of Claims 1 to 4, in which the juice or puree is fermented by a lactic acid bacterium at 15-45°C to pH 3.1-4.5.

6. Cooked juice or puree which may be obtained by means of the process according to one of Claims 1 to 5, having CIELAB hue parameters a* and b* of between 70% and 130%, and a CIELAB lightness parameter L* of greater than 70%, when compared with that of the same juice or puree of unblanched and uncooked plants.

7. Juice or puree according to Claim 6, obtained from unblanched, cooked carrots, and containing at least three times as much 3-isobutyl-2-methoxypyrazine, beta-ionone and 1-octen-3-ol as the same pasteurized juice or puree obtained from blanched carrots.
